# EUROPÄISCHE PATENTSCHRIFT

(11) **EP 0 728 661 B1**
(45) Veröffentlichungstag und Bekanntmachung des Hinweises auf die Patenterteilung: **24.09.1997**
(21) Anmeldenummer: 95119615.3
(22) Anmeldetag: 13.12.1995
(51) Int. Cl.: B62K 25/08

(54) **Vorderradaufhängung für ein Motorrad**
Front suspension for a motorcycle
Suspension avant pour motocyclette

(30) Priorität: 24.02.1995 DE 19506567
(43) Veröffentlichungstag der Anmeldung: 28.08.1996
(73) Patentinhaber: Bayerische Motoren Werke Aktiengesellschaft, 80788 München (DE)
(72) Erfinder: Baron, Günter, D-82140 Olching (DE)

(56) Entgegenhaltungen:
- DE-A- 3 513 974
- DE-A- 4 311 537
- FR-A- 2 535 670
- FR-A- 2 539 375

## Beschreibung

Die Erfindung bezieht sich auf eine Vorderradaufhängung für ein Motorrad mit einer Teleskopgabel nach dem Oberbegriff des Hauptanspruchs.

Eine bekannte Vorderradaufhängung zeigt die DE 35 13 974 C1. Bei dieser Vorderradaufhängung führt die durch den Längslenker gehaltene Teleskopgabel eine Kippbewegung um den oberen Lagerpunkt (Kugelgelenk am Lenkkopf) aus. Die Stärke der Kippbewegung richtet sich nach der Länge des Längslenkers und der Position des erwähnten Drehpunktes. Die aus dieser Bewegung entstehende Raderhebungskurve beeinflußt die Fahrstabilität, das Handling, das Ansprechverhalten der Teleskopgabel und die Antidive-Wirkung beim Bremsen des Motorrades.

Ein weiterer Nachteil ergibt sich aus der Kippbewegung der Gabel, die sich je nach Lenkerhöhe (Abstand vom Drehpunkt des Kugelgelenkes) in den Lenker überträgt. Das Resultat ist ein unangenehmes Schwenken der Lenkerenden beim Einfedern des Vorderrades.

Aufgabe der Erfindung ist es, eine gattungsgemäße Vorderradaufhängung so auszulegen, daß die erwähnten Nachteile nicht mehr bzw. nur noch in einem vertretbaren kleinen Maß auftreten.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung ist demnach das Kugelgelenk drehbar im Steuerkopf gehalten. Dadurch kann es der Schwenkbewegung der Teleskopgabel beim Einfedern entgegenwirken. Die Drehung des Kugelgelenks bewirkt eine Steuerstrebe, die von dem sich auf und ab bewegenden Längsleger beaufschlagt wird und diese Bewegung auf das Kugelgelenk übertragt. Bei entsprechender Dimensionierung der Steuerstrebe, des Längslenkers und der Anlenkpunkte der Steuerstrebe kann im Idealfall ein paralleler Versatz der Teleskopgabel beim Einfedern des Vorderrades erreicht werden. In einem solchen Fall verändert sich weder der Lenkwinkel noch der Nachlauf. Außerdem tritt das lästige Verschwenken der Lenkerenden nicht mehr auf. Die Lenkerhöhe kann daher unabhängig im Hinblick auf diese Konstruktion der Vorderradaufhängung gewählt werden. Ebenso ist durch den Parallelversatz der Teleskopgabel eine zufriedenstellende Antidive-Wirkung beim Bremsen erzielbar.

In einer zweckmäßigen Ausführungsform verbindet eine obere Gabelbrücke die Standrohre miteinander. Die Gabelbrücke weist eine Kugelpfanne auf, in der eine Kugel des so insgesamt sich ergebenden Kugelgelenkes gelagert ist. Die Kugel selbst wiederum ist Teil eines drehbar im Lenkkopf gelagerten Gelenkkörpers.

In einer weiteren zweckmäßigen Ausführungsform weisen sowohl der Längslenker als auch der Gelenkkörper des Kugelgelenks Lageraugen auf, an denen sich die Endabschnitte der Steuerstrebe gelenkig anschließen lassen. Um eine möglichst optimale gegensteuernde Bewegung des Kugelgelenks zu erhalten, ist es weiter vorteilhaft, das Befestigungsauge des Gelenkkörpers bezogen auf seine Drehachse dem Kugelkopf gegenüberliegend anzuordnen.

In einer weiteren vorteilhaften Ausgestaltung läßt sich die Steuerstrebe in ihrer Länge verändern. Das kann durch manuelle oder durch elektrische Mittel erfolgen. Auf diese Weise kann der Nachlauf des Vorderrades gezielt verändert werden. Dadurch lassen sich die Fahreigenschaften sowohl bei Hochgeschwindigkeitsfahrt als auch bei Langsamfahrt vorteilhaft beeinflussen.

Schließlich ist einer weiteren zweckmäßigen Ausgestaltung das Kugelgelenk im Lenkkopf seitlich verlagerbar. Das hat den Vorteil, daß bei einer Lenkbewegung ein seitliches Ausschwenken der Gabel möglich ist mit der Folge einer Verlagerung der Radaufstandsfläche. Es können auf diese Weise Kippmomente positiv beeinflußt werden.

Weitere vorteilhafte Ausgestaltungen der Erfindung ergeben sich aus der nachfolgenden Beschreibung eines Ausführungsbeispiels und der dazugehörigen Zeichnung.

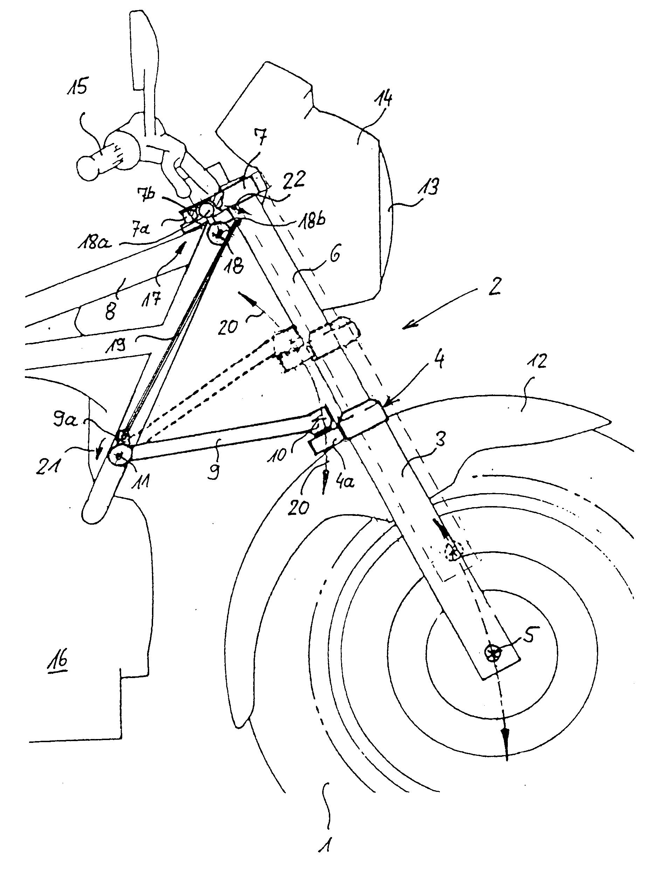

Die Zeichnung zeigt in einer einzigen Figur in schematischer Weise den vorderen Abschnitt eines Motorrades. Es ist ein Vorderrad 1 erkennbar, das in einer insgesamt mit 2 bezeichneten Teleskopgabel drehbar gehalten ist. Hierfür weist die Teleskopgabel zwei Gleitrohre 3 auf (in der Zeichnung ist aufgrund der Darstellungsart nur eines dieser Gleitrohre 3 erkennbar). Eine Gabelbrücke 4 verbindet die Gleitrohre 3 oberhalb des Vorderrades 1. An ihrem unteren Ende nehmen die Gleitrohre 3 eine Achswelle 5 auf, auf dem wie erwähnt, sich das Vorderrad 1 dreht.

Standrohre 6 (wiederum nur eines erkennbar) sind axial verschiebbar in den Gleitrohren 3 gehalten. Die Standrohre 6 sind an ihrem oberen Ende durch eine weitere Gabelbrücke 7 miteinander verbunden. Der Vollständigkeit halber sei noch erwähnt, daß ein Schutzblech 12 das Vorderrad 1 nach oben hin teilweise überdeckt. Außerdem ist an der Teleskopgabel ein Scheinwerfer 13 mit einer Verkleidung 14, sowie eine Lenkerarmatur 15 befestigt. Schließlich ist in der Zeichnung eine Antriebseinheit 16 angedeutet. Die Teleskopgabel 2 entspricht insoweit den derzeit in allen gängigen Motorradmarken verwendeten Vorderradgabeln.

Die obere Gabelbrücke 7 weist einen Fortsatz 7a auf mit einer Kugelpfanne 7b. Die Kugelpfanne 7b ist Teil eines Kugelgelenkes 17, mit dem die Teleskopgabel 2 am Fahrzeugaufbau gelagert ist. Der Fahrzeugaufbau wird in der Zeichnung repräsentiert durch einen Lenkkopf 8, der Teil des eigentlichen Motorradrahmens ist.

Im übrigen ist der Ausdruck "aufbaufest" im Rahmen dieser Anmeldung im Sinne von Fahrzeugrahmen bzw. am Fahrzeugrahmen befestigten Teile, wie Antriebsaggregate usw. zu verstehen.

Schließlich ist die Teleskopgabel 2 über einen Längslenker 9 am nicht näher bezifferten Fahrzeugrahmen festgelegt. Der Längslenker greift dabei über ein Kugelgelenk 10 an einem Fortsatz 4a der unteren Gabelbrücke 4 an. Sein anderes Ende ist über ein Drehgelenk 11 schwenkbar am Fahrzeugrahmen gelagert, dessen Drehachse quer zur Motorradlängsachse und in der Darstellung in die Zeichenebene hinein verläuft.

Die Kugelpfanne 7b ist Teil des erwähnten Kugelgelenks 17. Ein Gelenkkörper 18 weist einen Kugelkopf 18a auf, der in der Kugelpfanne 7a gelagert ist und damit mit dieser zusammen das Kugelgelenk 17 bildet. Der Gelenkkörper 18 seinerseits ist drehbar im Lenkkopf 8 gelagert, dabei verläuft die Drehachse quer zur Motorradlängsrichtung und parallel zu der Achse des dem Längslenker 9 zugeordneten Drehgelenks 11. Desweiteren ist an dem Gelenkkörper 18 etwa rechtwinkelig zum Kugelkopf 18a ein Lagerauge 18b ausgeformt. Es bildet zusammen mit der Kugel 18a einen Winkelhebel aus.

Eine Steuerstrebe 19 greift mit ihrem einen Endabschnitt an dem Lagerauge 18b und mit ihrem anderen Endabschnitt an einem Lagerauge 9a des Längslenkers 9 gelenkig an. Durch diese Verbindung wird dem Gelenkkörper 18 bzw. dem Kugelgelenk 17 eine Schwenkbewegung aufgezwungen, wie sie nachfolgend näher beschrieben ist.

Beim Einfedern des Vorderrades 1 schwenkt der Längslenker 9 nach oben in die gestrichelte Lage. Die Schwenkbewegung ist durch einen Doppelpfeil 20 gekennzeichnet. Der Längslenker 9 beschreibt dabei eine Kreisbahn und drückt die Teleskopgabel 2 zumindest anfänglich in Fahrtrichtung nach vorne. Gleichzeitig aber bewegt der Längslenker 9 sein Lagerauge 9a entgegen dem Uhrzeigersinn. Dieses zieht die Steuerstrebe 19 entsprechend der Bewegungsbahn nach unten und hinten. Der andere Endabschnitt der Steuerstrebe 19 verschwenkt dabei den Gelenkkörper 18 im Uhrzeigersinn und drückt auf diese Weise den Kugelkopf 18a nach vorne. Dieser nimmt bei seiner Bewegung über die Kugelpfanne 7b die obere Gabelbrücke 7 mit, so daß insgesamt sich der obere Abschnitt der Teleskopgabel 2 ebenfalls in Fahrzeugrichtung nach vorne bewegt. Die einzelnen Bewegungsbahnen sind durch Pfeile 21, 22 angedeutet.

Bei einer entsprechenden Dimensionierung wird auf diese Weise ein paralleler Versatz der Teleskopgabel 2 nach vorne erreicht, wie er durch die gestrichelten Linien in der Zeichnung dargestellt ist.

## Patentansprüche

1. Vorderradaufhängung für ein Motorrad mit einer Teleskopgabel (2), bei der die eine Achswelle (5) des Vorderrades (1) aufnehmenden Gleitrohre (3) durch eine untere Gabelbrücke (4) miteinander verbunden sind, bei der in den Gleitrohren axial verschiebbare Standrohre (6) über ein Kugelgelenk (17) an einem aufbaufesten Lenkkopf (8) schwenkbar gehalten sind und bei der an der unteren Gabelbrücke (4) über ein weiteres Kugelgelenk (10) ein Längslenker (9) angreift, der am Fahrzeugaufbau über ein Drehgelenk (11) mit quer zur Motorradlängsachse verlaufenden Drehachse schwenkbar gelagert ist, dadurch gekennzeichnet, daß das den Standrohren (6) zugeordnete Kugelgelenk (17) in einem drehbaren Gelenkkörper (18) um eine zu dem Drehgelenk (11) des Längslenkers (9) parallel verlaufenden Drehachse schwenkbar ist und daß ein Endabschnitt einer Steuerstrebe (19) gelenkig mit dem Kugelgelenk (17) und der gegenüberliegende Endabschnitt der Steuerstrebe (19) gelenkig mit dem Längslenker (9) verbunden ist.

2. Vorderradaufhängung nach Anspruch 1, dadurch gekennzeichnet, daß das den Standrohren (6) zugeordnete Kugelgelenk (17) aus einer in einer oberen Gabelbrücke (7) ausgeformten Kugelpfanne (7a) besteht, die einen Kugelkopf (18a) aufnimmt, wobei der Kugelkopf (18a) Bestandteil des im Lenkkopf (8) verdrehbaren Gelenkkörpers (18) ist.

3. Vorderradaufhängung nach Anspruch 2, dadurch gekennzeichnet, daß der Gelenkkörper (18) - bezogen auf die Drehachse - an seinem dem Kugelkopf (18a) gegenüberliegenden Seite ein Lagerauge (18b) für den Anschluß der Steuerstrebe (19) aufweist.

4. Vorderradaufhängung nach Anspruch 2 oder 3, dadurch gekennzeichnet, daß an dem Längslenker (9) im Bereich seines Drehgelenks (11) ein mit ihm fest verbundenes Gelenkauge (9a) für die Steuerstrebe (19) vorgesehen ist.

5. Vorderradaufhängung nach einem der Ansprüche 1 bis 4, dadurch gekennzeichnet, daß die Steuerstrebe (19) in ihrer Länge veränderbar ist.

6. Vorderradaufhängung nach einem der Ansprüche 1 bis 5, dadurch gekennzeichnet, daß das dem Standrohr (6) zugeordnete, im Lenkkopf (8) gelagerte Kugelgelenk (17) in Fahrzeugquerrichtung verschiebbar ist.

## Claims

1. A front wheel suspension for a motorcycle with a telescopic fork (2), in which the sliding tubes (3) accommodating one axle shaft (5) of the front wheel (1) are connected to one another via a lower fork bridge (4), wherein stanchions (6) axially-displaceable within the sliding tubes are pivot-mounted via a ball joint (17) in a steering head (8) fixed to the motorcycle body and wherein a longitudinal arm (9) engages with the lower fork bridge (4) via a further ball joint (10), with the said longitudinal arm (9) pivot-mounted on the motorcycle body via a pivot joint (11) with an axis of rotation transversely to the longitudinal axis of the motorcycle, characterised in that the ball joint (17) assigned to the stanchions (6) is pivotable in a rotatable joint body (18) about an axis of rotation extending parallel to the pivot joint (11) of the longitudinal arm (9) and that one end section of a control strut (19) is connected in an articulated manner to the ball joint (17) and the opposite end section of the control strut (19) is connected in an articulated manner to the longitudinal arm (9).

2. A front wheel suspension according to claim 1, characterised in that the ball joint (17) assigned to the stanchions (6) comprises a ball socket (7a) formed in an upper fork bridge (7), the said ball socket (7a) accommodating a ball head (18a), wherein the ball head (18a) is a constituent part of the joint body (18) rotatable in the steering head (8).

3. A front wheel suspension according to claim 2, characterised in that the joint body (18) - relative to the axis of rotation - has a bearing eye (18b) for the connection of the control strut (19) on that side opposite the ball head (18a).

4. A front wheel suspension according to claim 2 or claim 3, characterised in that the longitudinal arm (9) is provided in the region of its swivel joint (11) with a joint eye (9a), secured firmly to it, for the control strut (19).

5. A front wheel suspension according to any one of claims 1 to 4, characterised in that the control strut (19) length can be changed.

6. A front wheel suspension according to any one of claims 1 to 5, characterized in that the ball joint (17) assigned to the stanchion (6) and mounted in the steering head (8) can undergo displacement in a direction transverse to the motorcycle.

## Revendications

1. Suspension de roue avant pour une moto comprenant une fourche télescopique (2), dont les tubes coulissants (3) qui reçoivent l'axe (5) de la roue avant (1) sont reliés par un pont de fourche (4), inférieur, et le tube fixe (6) coulissant axialement dans les tubes coulissants est relié par une articulation à rotule (17) à une tête de guidage (8) solidaire du châssis, en étant maintenu basculant, et un bras longitudinal (9) est relié au pont de fourche (4) inférieur par une autre articulation à rotule (10), ce bras étant monté basculant sur le cadre de la moto par l'intermédiaire d'une articulation de pivotement (11) dont l'axe de pivotement est transversal à l'axe longitudinal de la moto,
caractérisée en ce que
l'articulation à rotule (17) est associée aux tubes fixes (6) et montée basculante dans un corps d'articulation (18) pivotant autour d'un axe de rotation parallèle à l'axe de rotation (11) du bras longitudinal (9), et un segment d'extrémité d'une traverse de commande (19) est relié de manière articulée à l'articulation à rotule (17) et le segment d'extrémité opposé de cette traverse de commande (19) est relié de manière articulée au bras longitudinal (9).

2. Suspension de roue avant selon la revendication 1,
caractérisée en ce que
l'articulation à rotule (17) associée aux tubes fixes (6) se compose d'une coupelle à rotule (7a) appartenant à un pont de fourche supérieur (7), coupelle qui reçoit une tête de rotule (18a), cette tête (18a) faisant partie du corps d'articulation (18) tournant dans la tête de guidage (8).

3. Suspension de roue avant selon la revendication 2,
caractérisée en ce que
le corps d'articulation (18) présente (par rapport à l'axe de rotation) à son extrémité opposée à la tête de rotule (18a), un oeillet de palier (18b) pour relier la traverse de commande (19).

4. Suspension de roue avant selon la revendication 2 ou 3,
caractérisée en ce qu'
un oeillet d'articulation (9a) relié solidairement au bras longitudinal (9), au niveau de son articulation de rotation (11) est prévu pour la traverse de commande (19).

5. Suspension de roue avant selon l'une des revendications 1 à 4,
caractérisée en ce que
la traverse de commande (19) est de longueur variable.

6. Suspension de roue avant selon l'une des revendications 1 à 5,
caractérisée en ce que
l'articulation à rotule (17) prévue dans la tête de guidage (8), associée au tube fixe (6) est coulissante dans la direction transversale de la moto.
